# EUROPEAN PATENT SPECIFICATION

(11) **EP 0 690 901 B1**
(45) Date of publication and mention of the grant of the patent: **30.12.1998**
(21) Application number: 94911180.1
(22) Date of filing: 15.03.1994
(51) Int. Cl.: C10M 107/28, C10M 145/16, C10M 169/04, C08F 210/14, C08F 222/14

(54) **HIGH-VISCOUS LUBRICANT COPOLYMER COMPATIBLE WITH NON-POLAR BASE FLUIDS**
MIT UNPOLAREN GRUNDFLUESSIGKEITEN VERTRAEGLICHES HOCHVISKOSES COPOLYMER FUER SCHMIERMITTEL
COPOLYMERE LUBRIFIANT A VISCOSITE ELEVEE COMPATIBLE AVEC LES FLUIDES DE BASE NON POLAIRES

(30) Priority: 22.03.1993 EP 93200827
(43) Date of publication of application: 10.01.1996
(73) Proprietor: Akzo Nobel N.V., 6824 BM Arnhem (NL)
(72) Inventor: WALLFAHRER, Uwe, Hans, D-52372 Kreuzau (DE); MACHEREY, Heribert, Josef, D-52372 Kreuzau (DE)
(74) Representative: Schalkwijk, Pieter Cornelis
(86) International application number: EP9400824
(87) International publication number: WO9421757

(56) References cited:
- EP-A- 0 075 217
- US-A- 2 543 964
- US-A- 2 666 746
- US-A- 4 526 950

## Description

The invention pertains to a copolymer suitable for use in or as a lubricant, which copolymer is made up of an α-olefin and a (di)ester of an α,β ethylenically unsaturated dicarboxylic acid. More particularly, the invention pertains to a lubricant or lubricant additive comprising a copolymer of an α-olefin having of from 8 to 18 carbon atoms and a fumaric diester having an aliphatic alcohol as the esterifying component.

Copolymers of this class are known, particularly in the field of lubricants.

Thus, copolymers as indicated above are disclosed in US 2,543,964 (Giammaria) as pour-point depressing additives for lubricating mineral oils. Giammaria employs α-olefins having of from 8 to 18 carbon atoms and maleic or fumaric diesters of alcohols having 12 or more carbon atoms. Disclosed in particular are copolymers of C₈ α-olefin and C₁₈ α-olefin with fumaric diesters of C₁₂ alcohol, C₁₄ alcohol, and the Lorol-B® mixture of C₁₀ to C₁₈ alcohols which has C₁₂ and C₁₄ alcohols as the main constituents.

In US 2,666,746 (Munday) the production is disclosed of copolymers of a fumaric acid ester of C₈₋₁₈ alcohol, particularly decyl, lauryl, or tetradecyl alcohol, and a vinyl ester of a fatty acid.

Copolymers within the above class are also disclosed in EP 75217. The esters are preferably diesters of maleic or fumaric acid, the esterifying alcohols being linear and branched alcohols having of from 3 to 10 carbon atoms. The α-olefins employed have of from 10 to 16 carbon atoms. The disclosed copolymers are suitable as lubricants and lubricant additives, and characteristically have low pour-points, molecular weights of from 1300 to 3250, and viscosities at 100°C of maximally about 80 cSt.

JP 157687/1980 generically discloses copolymers of the above type, employing maleic and fumaric esters of alcohols with chain lengths varied within the range of C₁ to C₁₈, preferably C₁ to C₈, and α-olefins having of from 4 to 60 carbon atoms.

Also Grava, US 4,526,950, provides a disclosure of a general nature regarding the above type of copolymers. Described are interpolymers of α-olefins having at least about 6 carbon atoms and unsaturated carboxylic acids or derivatives thereof. Acids mentioned are maleic and fumaric acid. As an acid derivative maleic anhydride, which is the comonomer of preferred choice, is specifically referred to.

US 2,615,845 to Lippincott discloses lubricating oil additives which may be copolymers of α-olefins having of from 2 to 18 carbon atoms and α,β ethylenically unsaturated carboxylic acids and their derivatives, notably anhydrides (e.g., maleic anhydride). The copolymers may be modified, e.g., by esterification. Suitable esterifying alcohols are said to range from ethanol to octadecanol. In particular, Lippincott teaches esterification with the above-mentioned mixture Lorol-B®

Kagan, in US 3,314,908, discloses specific copolymers of a C₄₋₉ α-olefin and fumaric diesters wherein two different esterifying alcohols are present either as mixed esters or as a mixture of single alcohol diesters, one alcohol having a chain length of C₁₋₃ and the other of C₄₋₉. The Kagan copolymers are tough, flexible solids which serve as a paint vehicle.

In EP 296 714 lubricating oil flow improvers are disclosed which may be copolymers of unsaturated dicarboxy esters with, e.g., α-olefins. In the case of α-olefins being used, maleic anhydride is explicitly preferred as the dicarboxylic monomer. It is also disclosed to esterify the carboxyl groups, either before or after copolymerization, with C₁ to C₂₀ alcohols. Preferred are C₈ to C₁₈ aliphatic alcohols. Suitable α-ofefins are said to contain between about 6 and 46 carbon atoms.

In EP 365 081 a two-cycle engine oil composition is disclosed in which a copolymer of the above category is employed. Preferred α-olefins have of from 6 to 18 carbon atoms. These are typically copolymerized with esters of maleic, fumaric, or other α,β ethylenically unsaturated dicarboxylic acids, the esterifying alcohols having 1 to 20 carbon atoms. Preferred are C₃ to C₈ alcohols.

In EP 429 123 compositions from α,β-unsaturated dicarboxylic acid esters and olefinically unsaturated compounds are disclosed. The compositions are suitable for use as lubricants and lubricant additives and comprise a substantial amount of an intermediate molecular weight reaction product which is neither the lower molecular weight alkenyl or alkyl succinic reaction product, nor the copolymer of the olefin and the ester.

While the prior art thus comprises viable lubricants and lubricant additives, the disclosed copolymers fall short when it comes to satisfying the demands that are the object of the present invention.

There is a need to provide lubricants and lubricant additives that are compatible with non-polar base fluids like poly α-olefins (PAO), hydrocracked basestocks, polyisobutylenes, and the like. At the same time, these lubricants should have a high viscosity and be able to boost the viscosity of the non-polar base fluids in conjunction with which they can be used as an additive, and/or act as a viscosity index improver therefor. For known copolymers of the above-identified class, these demands appear incompatible.

These demands are now satisfied by virtue of the present invention. To this end the invention provides lubricants and lubricant additives comprising a copolymer within the general class indicated in the opening paragraph, on the basis of α-olefins having of from 8 to 18 carbon atoms and a fumaric diester having an aliphatic alcohol as the esterifying component, the copolymer having a weight average molecular weight above approximately 3500, and wherein the esterifying component is selected from the group consisting of linear octanol, branched octanol, linear nonanol, branched nonanol, linear decanol, branched decanol , branched tridecanol, and mixtures thereof.

These copolymers, which form a novel selection within the general class outlined above, display desirable properties, including a viscosity at 100°C of more than 200 mm²/sec (cSt) and good PAO compatibility. Furthermore, they are liquid at room temperature and despite their relatively high viscosities have relatively low pour-points. Other advantages include a high viscosity index and a good load carrying capacity. Furthermore, the average molecular weights, though above approximately 3500, are relatively low in respect of the high viscosities. This makes the copolymers shear stable. The copolymers can suitably be used as multi-purpose additives to engine oils: they can be used as a shear-stable viscosity index improver, but also as an anti-wear additive. The instant copolymers are particularly useful as an adjuvant for synthetic gear oils.

A description of various embodiments of the invention is given below.

The α-olefins may be selected from linear or branched α-olefins having of from 8 to 18 carbon atoms. Shorter α-olefins are not very suitable due to their low boiling point, longer α-olefins generally yield copolymers that are not sufficiently compatible with non-polar base fluids such as PAO.

Suitable examples of α-olefins are 1-octene, 1-decene, 1-dodecene, 1-tetradecene, 1-hexadecene, 1-octadecene. Mixtures of linear and/or branched α-olefins can also be employed. Further, it should be noted that commercially available olefins are generally mixtures characterized by a predominant olefin species and a predominant or average carbon number content. Such commercially available mixtures comprising in substantial part α-olefins with minor amounts of internal olefins and vinylidene compounds are particularly preferred, as they will lead to copolymers having the highest viscosities. Preferred are the C₁₂ to C₁₆ α-olefins, with the C₁₄ to C₁₆ α-olefins being most preferred.

It is a requirement that the α,β ethylenically unsaturated dicarboxylic diester selected be a fumaric ester. This is a deviation from the trend in the art, where either maleic and fumaric diesters are recognized as being equally viable, or maleic acid is preferred.

A quintessential aspect of the present invention is the selection of the appropriate esterifying alcohol component. E.g., it was found that the Lorol -B® mixture employed in the prior art yielded unsatisfactory results. Notably, the resulting copolymers are not PAO compatible.

It was established, in accordance with the present invention, that the desired combination of thus far incompatible properties can be achieved by employing as the esterifying component an alcohol having of from 8 to 10 carbon atoms. A preferred embodiment is iso-C₁₀ alcohol as the esterifying component and an α-olefin with 12 to 16 carbon atoms.

It was further established that, while esterifying alcohols having more than 10 carbon atoms do not yield copolymers possessing the required compatibility with non-polar base fluids, unexpectedly a highly suitable copolymer in this respect is formed if iso-C₁₃ alcohol is employed.

It is also possible to employ mixtures of alcohols, preferably all selected from the group consisting of linear octanol, branched octanol , linear nonanol, branched nonanol , linear decanol , branched decanol, and branched tridecanol. It should be noted that the nature of the present copolymers will not be drastically changed by minor additions of other alcohols, nor by minor additions of α-olefins outside the above scope or the use of minor amounts of an α,β ethylenically unsaturated dicarboxylic ester other than a difumarate.

It should be noted, though, that an increased acid number has a negative effect on the product's stability, which particularly is a drawback for use in gear-oils. Hence, in gear-oils the amount of monoesters (monofumarates) present should be kept as low as possible, and preferably monoesters are avoided altogether.

The monomer ratio of α-olefin to difumarate is generally within the range of from about 4:1 to about 1:2, and preferably of from about 2:1 to about 1:1.

It is a further requirement that the copolymer have a weight average molecular weight above 3500. For example, it is for that reason among others that the copolymers disclosed in EP 75217 are unsuitable for meeting the demands underlying the present invention.

The man skilled in the art of copolymerization generally knows how to vary reaction conditions so as to achieve the required molecular weight. However, the invention also pertains to a method which was found to be particularly suitable for preparing the copolymers having the unexpected and desirable combination of properties outlined hereinbefore.

The method of the invention comprises reacting the α-olefin and the fumaric diester under the following conditions:
- applying a polymerization temperature, within the range of from 110°C to 150°C, and optimally between 120°C and 140°C;
- employing a radical initiator, such as a peroxide, displaying favourable decomposition in the above temperature range;
- dosing the initiator continuously to a reaction mixture of the α-olefin and the difumarate. If needed, PAO compatibility can be improved by dosing both the initiator and the difumarate to the α-olefin;

It should be noted that a process for the preparation of a copolymer of an α-olefin and a fumaric diester wherein an α-olefin having of from 8 to 18 carbon atoms is reacted with a fumaric diester under the influence of a peroxide radical initiator while applying elevated temperature, is known from the aforementioned Giammaria disclosure. Giammaria generally employs lower temperatures than is the case with the preferred process of the invention, and the resulting products were found to lack PAO compatibility.

As indicated above, the copolymers of the present invention are suitable as lubricants. That is, they possess sufficient lubricating properties for use as a lubricant base fluid. As base fluids they are particularly suitable for use in high-temperature applications in the industrial lubricant market.

More importantly, however, the copolymers of the invention provide lubricant additives that are compatible with non-polar base fluids such as poly α-olefins (PAO), e.g., PAO-6, PAO-8, and PAO-10, which are particularly used in 4-stroke engine oils and gear-oils, hydrocracked basestocks, which are also used in 4-stroke engine oils, and polyisobutylenes and the like (used in 2-stroke engine oils), and at the same time have a sufficiently high viscosity. They are compatible with these non-polar base fluids over a wide temperature range: even at temperatures as low as -25°C the copolymers are PAO-compatible at substantially every weight ratio (the lower the temperature, the more compatibility problems are normally to be expected). The high viscosity is advantageous in that the viscosity of the non-polar base stocks can be boosted without adversely affecting the low temperature viscosimetrics. In this respect it is preferred that the copolymers have a low pour-point.

A typical lubricating oil according to the present invention comprises poly(α-olefine) and an amount of 1 to 70 wt%, preferably 5 to 50 wt%, of a lubricant additive as herein defined.

The copolymers of the present invention have viscosities at 100°C of more than at least 200 mm²/sec and in preferred cases of 300 mm²/sec or higher, e.g., up to about 1100 mm²/sec. Preferred copolymers in this respect employ branched alcohols as the esterifying component. Still more preferred copolymers, which combine a high viscosity with a low pour-point, employ iso-C₈ alcohol. The preferred copolymers display the combined properties of having a high viscosity, a high viscosity index, and a low pour point.

Further, the copolymers of the present invention are able to enhance the viscosity of the non-polar base fluids in conjunction with which they can be used as an additive and may also improve (enhance) the viscosity index thereof. A high viscosity index is important, as for many applications, notably engine lubricants, the lubricant's flow properties should not substantially change as a result of temperature changes.

A typical copolymer according to the present invention has a weight average molecular weight above approximately 3500, the α-olefin has 8 to 12 carbon atoms and the esterifying component is iso-C₈ alcohol.

Another typical copolymer according to the present invention has a weight average molecular weight above approximately 3500, the α-olefin has 14 to 16 carbon atoms and the esterifying component is n-C₈ alcohol.

The invention will be further illustrated with reference to the following unlimitative examples.

### EXAMPLE 1

In a reaction vessel 168 g C₁₂ α-olefin and 340 g di-isooctyl fumarate (difumarate of 2-ethylhexyl alcohol) were heated, with stirring, to 120°C. While the temperature was kept at this level, 1.5 ml t-butyl peroxy-3,5,5-trimethylhexanoate were dosed continuously, with stirring, over a period of 3 hours. After one further hour of stirring at 120°C, volatiles (94 g) were removed in vacuo. The product subsequently obtained was a colourless, viscous liquid copolymer of the α-olefin and the difumarate. Characteristic properties of the product are a pour-point (measured in accordance with ASTM D 97) of -15°C, a viscosity at 100°C (measured in accordance with ASTM D 445) of 796 mm²/sec, a weight average molecular weight (determined by size exclusion chromatography = SEC) of 6800, and a viscosity index (determined in accordance with ASTM D 2270) of 254. An amount of 10% by weight of the copolymer was added to PAO-6 (i.e., a poly(α-olefine having a viscosity at 100°C of 6 cSt (mm²/sec). At -25°C a clear solution was obtained.

### EXAMPLE 2

Following an essentially similar procedure to that outlined in Example 1, the copolymers in accordance with the invention listed in Table 1 were prepared. Isooctanoldifumarate means the diester of fumaric acid and 2-ethylhexyl alcohol. Isotridecanoldifumarate means the diester of fumaric ester and a commercially available mixture of primary isotridecanoles (generally prepared by Oxo-synthesis from tetrapropylene). All copolymers in accordance with the invention displayed good PAO compatibility in that at 4°C a clear solution of 10% by weight in PAO-6 was obtained.

**TABLE 1**

| (All readily-compatible with PAO-6) | | | | | |
|---|---|---|---|---|---|
| α-Olefin | Difumarate | Mol.wt. | Visc. mm²/s | VI | Pour-Point °C |
| 1-octene | iso-octanol | | 735 | 239 | - 5°C |
| 1-octene | n-decanol | 9100 | 233 | 232 | -26°C |
| 1-decene | iso-octanol | 7400 | 1098 | 263 | -10°C |
| 1-dodecene | iso-decanol | 7200 | 641 | 226 | -14°C |
| 1-tetradecene | iso-octanol | 6700 | 668 | 251 | -18°C |
| 1-tetradecene | iso-decanol | 7050 | 600 | 227 | -15°C |
| 1-hexadecene | n-octanol | 9100 | 302 | 250 | -29°C |
| 1-hexadecene | iso-octanol | 6600 | 486 | 242 | -23°C |
| 1-hexadecene | n-decanol | 8400 | 250 | 245 | -23°C |
| 1-hexadecene | iso-decanol | 8050 | 636 | 236 | - 7°C |
| 1-octadecene | iso-octanol | 7000 | 427 | 237 | -18°C |

### EXAMPLE 3

Following an essentially similar procedure to that outlined in Example 1, copolymers were prepared employing iso-tridecanoldifumarate. These copolymers displayed a good PAO compatibility in that at 4°C a clear solution of 10% by weight in PAO-6 was obtained. The copolymer of 1-octene and iso-tridecanoldifumarate had a molecular weight of 6400, displayed a viscosity of 542 mm²/sec, and had a viscosity index of 199. The copolymer of 1-hexadecene and iso-tridecanoldifumarate had a molecular weight of 7400, a viscosity of 534 mm²/sec, and a viscosity index of 221. Of the latter copolymer also the pour point was measured: -15°C.

### COMPARATIVE EXAMPLE 1

Following an essentially similar procedure to that outlined in Example 1, the copolymers not in accordance with the invention listed in Table 2 were prepared. All copolymers not in accordance with the invention displayed poor PAO compatibility in that at 4°C solution of 10% by weight in PAO-6 turned out to be hazy.

**TABLE 2**

| (All poorly compatible with PAO-6) | | | | | |
|---|---|---|---|---|---|
| α-Olefin | Difumarate | Mol.wt. | Visc. mm²/s | VI | Pour-Point °C |
| 1-octene | n-hexanol | | 380 | 231 | -19°C |
| 1-octene | n-dodecanol | 8600 | 180 | 226 | - 7°C |
| 1-dodecene | iso-butanol | 7050 | 2902 | | +20°C |
| 1-dodecene | n-hexanol | 7100 | 371 | 239 | -22°C |
| 1-dodecene | 1-dodecanol | 8800 | 237 | 274 | - 5°C |
| 1-tetradecene | n-butanol | 8100 | 652 | 235 | -18°C |
| 1-tetradecene | iso-butanol | 7700 | 2300 | | +20°C |
| 1-hexadecene | n-butanol | 8100 | 469 | 230 | -19°C |
| 1-hexadecene | iso-butanol | 7150 | 1200 | 181 | +11°C |
| 1-hexadecene | n-dodecanol | 9000 | 238 | 245 | +4°C |
| 1-eicosene | iso-octanol | 7500 | 228 | 202 | +30°C |
| 1-eicosene | iso-decanol | 7400 | 289 | | +20°C |
| 1-eicosene | iso-tridecanol | 5600 | 210 | | +22°C |

## Claims

1. A lubricant or lubricant additive comprising a copolymer of an α-olefin having of from 8 to 18 carbon atoms and a fumaric diester having an aliphatic alcohol as the esterifying component, characterized in that the copolymer has a weight average molecular weight above 3500, and wherein the esterifying component is selected from the group consisting of linear octanol, branched octanol, linear nonanol, branched nonanol, linear decanol, branched decanol, branched tridecanol, and mixtures thereof.

2. A lubricant or lubricant additive according to claim 1, wherein the esterifying component is a C₈ to C₁₀ alcohol.

3. A lubricant or lubricant additive according to claim 1, wherein the esterifying component is iso-C₁₃ alcohol.

4. A lubricant or lubricant additive according to any one of the preceding claims, characterized in that the α-olefin has 12 to 16 carbon atoms.

5. A lubricant or lubricant additive according to claim 4, characterized in that the esterifying component is iso-C₁₀ alcohol.

6. A lubricant or lubricant additive according to claim 4, characterized in that the esterifying component is iso-C₈ alcohol.

7. A lubricating oil composition comprising poly(α-olefine) and an amount of 1 to 70 wt%, preferably 5 to 50 wt%, of an additive in accordance with any one of the preceding claims.

8. A process for the preparation of a copolymer of an α-olefin and a fumaric diester having a weight average molecular weight above 3500 wherein an α-olefin having of from 8 to 18 carbon atoms is reacted with a fumaric diester under the influence of a peroxide radical initiator while applying elevated temperature, characterized in that the fumaric diester has an esterifying component which is selected from the group consisting of linear octanol, branched octanol, linear nonanol, branched nonanol , linear decanol , branched decanol, branched tridecanol and mixtures thereof, and the temperature is kept within the range of from 110°C to 150°C.

9. A process according to claim 8, characterized in that the temperature is kept between 120°C and 140°C.

10. A process according to claim 8 or 9, characterized in that the peroxide is t-butylperoxy-3,5,5-trimethylhexanoate.

11. A copolymer of an α-olefin having 8 to 18 carbon atoms and a fumaric diester having an aliphatic alcohol as the esterifying component, characterized in that the copolymer has a weight average molecular weight above 3500, and where the esterifying component is selected from the group consisting of linear octanol, branched octanol, linear nonanol , branched nonanol , linear decanol , branched decanol, branched tridecanol , and mixtures thereof, obtainable by a process according to any one of claims 8 to 10.

12. A copolymer according to claim 11 characterized in that the α-olefin has 8 to 12 carbon atoms, and wherein the esterifying component is iso-C₈ alcohol.

13. A copolymer according to claim 11, characterized in that the α-olefin has 14 to 16 carbon atoms, and wherein the esterifying component is n-C₈ alcohol.

## Patentansprüche

1. Schmiermittel oder Schmiermitteladditiv, enthaltend ein Copolymer eines α-Olefins mit 8 bis 18 Kohlenstoffatomen und eines Fumarsäurediesters mit einem aliphatischen Alkohol als Veresterungskompontente, dadurch gekennzeichnet, dass das Copolymer ein Gewichtsmittelmolekulargewicht über 3500 besitzt und die Veresterungskomponente gewählt ist aus der Gruppe bestehend aus linearem Octanol, verzweigtem Octanol, linearem Nonanol, verzweigtem Nonanol, linearem Decanol, verzweigtem Decanol, verzweigtem Tridecanol und Mischungen hiervon.

2. Schmiermittel oder Schmiermitteladditiv nach Anspruch 1, bei dem die Veresterungskomponente ein C₈- bis C₁₀-Alkohol ist.

3. Schmiermittel oder Schmiermitteladditiv nach Anspruch 1, bei dem die Veresterungskomponente iso-C₁₃-Alkohol ist.

4. Schmiermittel oder Schmiermitteladditiv nach einem der vorangehenden Ansprüche, dadurch gekennzeichnet, dass das α-Olefin 12 bis 16 Kohlenstoffatome enthält.

5. Schmiermittel oder Schmiermitteladditiv nach Anspruch 4, dadurch gekennzeichnet, dass die Veresterungskomponente iso-C₁₀-Alkohol ist.

6. Schmiermittel oder Schmiermitteladditiv nach Anspruch 4, dadurch gekennzeichnet, dass die Veresterungskomponente iso-C₈-Alkohol ist.

7. Schmierölzusammensetzung, enthaltend Poly(α-olefin) und einen Anteil von 1 bis 70 Gew.%, vorzugsweise 5 bis 50 Gew.%, eines Additivs nach einem der vorangehenden Ansprüche.

8. Verfahren zur Herstellung eines ein Molekulargewichtsmittel von über 3500 aufweisenden Copolymers eines α-Olefins und eines Fumarsäurediesters, worin ein α-Olefin mit 8 bis 18 Kohlenstoffatomen unter dem Einfluss eines Peroxid-Radikalinitiators und unter Anwendung erhöhter Temperatur mit einem Fumarsäurediester umgesetzt wird, dadurch gekennzeichnet, dass der Fumarsäurediester eine Veresterungskomponente enthält, die gewählt ist aus der Gruppe bestehend aus linearem Octanol, verzweigtem Octanol, linearem Nonanol, verzweigtem Nonanol, linearem Decanol, verzweigtem Decanol, verzweigtem Tridecanol und Mischungen hiervon, und dass die Temperatur im Bereich von 110°C bis 150°C gehalten wird.

9. Verfahren nach Anspruch 8, dadurch gekennzeichnet, dass die Temperatur zwischen 120°C und 140°C gehalten wird.

10. Verfahren nach Anspruch 8 oder 9, dadurch gekennzeichnet, dass das Peroxid t-Butylperoxy-3,5,5-trimethylhexanoat ist.

11. Copolymer aus einem α-Olefin mit 8 bis 18 Kohlenstoffatomen und einem Fumarsäurediester mit einem aliphatischen Alkohol als Veresterungskomponente, dadurch gekennzeichnet, dass das Copolymer ein Gewichtsmittelmolekulargewicht von über 3500 hat und die Veresterungskomponente gewählt ist aus der Gruppe bestehend aus linearem Octanol, verzweigtem Octanol, linearem Nonanol, verzweigtem Nonanol, linearem Decanol, verzweigtem Decanol, verzweigtem Tridecanol und Michungen hiervon, erhältlich nach einem Verfahren gemäss einem der Ansprüche 8 bis 10.

12. Copolymer nach Anspruch 11, dadurch gekennzeichnet, dass das α-Olefin 8 bis 12 Kohlenstoffatome enthält und die Veresterungskomponente iso-C₈-Alkohol ist.

13. Copolymer nach Anspruch 11, dadurch gekennzeichnet, dass das α-Olefin 14 bis 16 Kohlenstoffatome enthält und die Veresterungskomponente n-C₈-Alkohol ist.

## Revendications

1. Un lubrifiant ou additif de lubrifiant comprenant un copolymère d'une α-oléfine ayant de 8 à 18 atomes de carbone et d'un diester fumarique comportant un alcool aliphatique en tant que composant estérifiant, caractérisé en ce que le copolymère présente une masse moléculaire moyenne en masse supérieure à environ 3500 et en ce que le composant estérifiant est choisi dans le groupe consistant en octanol linéaire, octanol ramifié, nonanol linéaire, nonanol ramifié, décanol linéaire, décanol ramifié, tridécanol ramifié, et leurs mélanges.

2. Un lubrifiant ou additif de lubrifiant selon la revendication 1, dans lequel le composant estérifiant est un alcool en C₈ à C₁₀.

3. Un lubrifiant ou additif de lubrifiant selon la revendication 1, dans lequel le composant estérifiant est un iso-alcool en C₁₃.

4. Un lubrifiant ou additif de lubrifiant selon l'une quelconque des revendications précédentes, caractérisé en ce que l'α-oléfine comporte de 12 à 16 atomes de carbone.

5. Un lubrifiant ou additif de lubrifiant selon la revendication 4, caractérisé en ce que le composant estérifiant est un iso-alcool en C₁₀.

6. Un lubrifiant ou additif de lubrifiant selon la revendication 4, caractérisé en ce que le composé estérifiant est un iso-alcool en C₈.

7. Une composition d'huile lubrifiante comprenant une poly-α-oléfine et une quantité de 1 à 70%, de préférence de 5 à 50% en poids, d'un additif selon l'une quelconque des revendications précédentes.

8. Un procédé de préparation d'un copolymère d'α-oléfine et de diester fumarique ayant une masse moléculaire moyenne en masse supérieure à 3500, dans lequel on fait réagir une α-oléfine ayant de 8 à 18 atomes de carbone avec un diester fumarique sous l'effet d'un initiateur radicalaire peroxydique tout en appliquant une température élevée, ce procédé étant caractérisé en ce que le diester fumarique a un composant estérifiant qui est choisi dans le groupe consistant en octanol linéaire, octanol ramifié, nonanol linéaire, nonanol ramifié, décanol linéaire, décanol ramifié, tridécanol ramifié et leurs mélanges, et la température est maintenue dans la fourchette de 110 à 150°C.

9. Un procédé selon la revendication 8, caractérisé en ce que la température est maintenue entre 120°C et 140°C.

10. Un procédé selon la revendication 8 ou 9, caractérisé en ce que le peroxyde est le t-butylperoxy-3,5,5-triméthylhexanoate.

11. Un copolymère d'une α-oléfine ayant de 8 à 18 atomes de carbone et d'un diester fumarique comportant un alcool aliphatique en tant que composant estérifiant, caractérisé en ce que le copolymère présente une masse moléculaire moyenne en masse supérieure à 3500 et en ce que le composant estérifiant est choisi dans le groupe consistant en octanol linéaire, octanol ramifié, nonanol linéaire, nonanol ramifié, décanol linéaire, décanol ramifié, tridécanol ramifié et leurs mélanges, susceptible d'être obtenu par un procédé selon l'une quelconque des revendications 8 à 10.

12. Un copolymère selon la revendication 11, caractérisé en ce que l'α-oléfine comporte de 8 à 12 atomes de carbone et en ce que le composant estérifiant est un iso-alcool en C₈.

13. Un copolymère selon la revendication 11, caractérisé en ce que l'α-oléfine comporte de 14 à 16 atomes de carbone et en ce que le composant estérifiant est un n-alcool en C₈.
